# EUROPEAN PATENT APPLICATION

(11) **EP 1 525 975 A1**
(43) Date of publication of application: **27.04.2005**
(21) Application number: 03425682.6
(22) Date of filing: 21.10.2003
(51) Int. Cl.: B30B 15/02, B29C 43/06, B29C 33/20, B29C 33/36, B29C 33/44, B29C 35/02, B29B 17/00

(54) **Installation and method for the production of rubber and/or plastic conglomerates**

(71) Applicant: M.C.M. S.r.l., 63030 Castel di Lama, Ascoli Piceno (IT)
(72) Inventor: Piszcek, Carlo, 64010 Ancarano (Teramo) (IT); Massi, Osvaldo, 63030 Monte Prandone (Ascoli Piceno) (IT)
(74) Representative: Lanzoni, Luciano

(57) **Abstract**

An installation for the production of rubber and/or plastic conglomerates, comprises at least a moulding caisson (200) which has a lower die (201) filled with a mixture containing particles of rubber and/or plastic material and an aggregating material. The installation (1) further comprises a moulding station (100) provided with thruster means (101) movable between a non operative position and an operative position, in which they thrust a snapping tool on the lower die (201), to compress the mixture contained in the caisson ( 200). The snapping tool is defined by an upper lid (202) belonging to the caisson (200) and able to be inserted at least partially in the lower die (201). The moulding caisson (200) further comprises a device (203) for locking the upper lid (202) on the lower die (201), to maintain the mixture in the compression state provided by the thruster means (101) even when the thruster means (101) are disengaged from the upper lid (202).

## Description

The present invention relates to an installation and a method for the production of rubber and/or plastic conglomerates, preferably obtained starting from granules of recycled rubber and/or plastic.

The conglomerates are formed from a mixture, whereof usually 90% is constituted by rubber granules, preferably from recycled rubber, and the remaining 10% is constituted by a binder whose function, suitably catalysed, is to provide the compound with a predetermined compactness and mechanical consistency.

The conglomerates described above are obtained by subjecting the mixture of particles of rubber/plastic and binder to an increase in pressure which starts the catalysis process and binds together the particles. According to known methods, the catalysis of the binder can be automatic, just a matter of time, or activated by subjecting the mixture to a determined temperature.

Such conglomerates are usually employed, in the form of briquettes, tiles or the like, to obtain sound-insulating coatings or surfaces able to absorb any impacts. Purely by way of example, the above conglomerates can be used to obtain anti-traumatic paving for playgrounds, safety floors, coatings for bicycle tracks, sound-insulating panels for home walls and floors, noise barriers.

In the prior art, the incoherent mixture is introduced into a container of a die or mould, whose inner surface is appropriately shaped according to the shape and dimensions of the conglomerate products to be obtained. A shaped tray, or bottom, may be set down onto the bottom of the die before filling. Similarly, the upper surface of the product can be impressed by placing a plate over the mixture prior to the pressing operation.

The filled and shaved die is placed between to bearing planes of a press which exerts a pressure on the plate and compresses the mixture. Simultaneously, a set of electric resistors interposed under the compression planes of the press transfers heat to the mixture by conduction. The mixture is thereby simultaneously compressed and made to react by heating.

The press must remain closed on the die throughout the reaction time or at least for a sufficient time for the material to acquire most of its consistency and density.

The stationing time of the mould under the press depends on the thickness of the artefact, on the times of first catalysis, on the physical-mechanical characteristics to be provided to the product and on the physical-chemical characteristics of the materials composing the mixture.

Only at the end of the pressing and simultaneous heating phase is the piston of the press raised and the die removed to allow for the cooling and hardening of the product.

Lastly, the die is opened, to extract the product, by means of hand-operated or mechanically operated spatulas. The time that elapses before extraction is linked to the time required for the minimum required degree of catalysis, to handling temperature and to the degree of cohesion of the product.

The Applicant has observed that prior art installations and methods used to produce conglomerates of the type described above can be improved in several aspects.

In particular, the press system of the type adopted in prior art installations is too rigid.

In the first place, the process implemented by means of such a system has very long processing times due to the joint execution in a single operation of the pressing and heating steps under the press. The press remains occupied with a single load of mixture for a very long time.

Consequently, to have a sufficient productivity it is necessary to adopt large die bodies and hence very large presses, which have a series of problems linked to non uniform heat distribution in all points of the mixture. Moreover, during the considerable times required to load the large dies, it is possible that catalysis and material cohesion may start in the mixture loaded first, before the completion of the filling and shaving steps, with the consequent low quality of the final product.

Furthermore, the system is difficult to adapt to briquettes/tiles having different shapes and thickness. To obtain products with distinct shapes in the same moulding run, it is necessary to use shaped shims to be interposed between bottom and punch, with consequent mould construction and tooling problems. The presence of briquettes of different types in a single die also sets obvious productivity limits on each of these types of briquettes.

Complex moulds like the ones described above entail the emergence of problems linked with heat transfer through the different elements composing the moulds themselves. Uncontrolled and non homogeneous thermal inertia, due to the different combinations of plates, bottoms and shims, influence the quality and repeatability of the products. Since rubber has a high thermal insulation coefficient, heat tends to pass into the metal parts of the moulds and this causes enormous differences between the times required to uniform the temperature in a large briquette and in a small one. Unfortunately, heating and cooling times are the same for all products of a same run, even if they differ in shape, thickness and density. Similarly, the pressure exerted in the same moulding run on different products is the same for them all.

Additionally, known systems for transporting the die from the moulding area to the unloading area do not allow to adapt transporting velocity to various shapes and dimensions of the dies or to the needs for acceleration/slowing which may emerge along the work cycle.

Lastly, the unloading of the briquettes/tiles formed in the dies, performed by forcing their exit by means of spatula or similar tools, can damage the product, especially when the still hot product does not have an optimal mechanical consistency.

An object of the present invention is to solve the problems observed in the prior art proposing an installation and a method for the production of rubber and/or plastic conglomerates that are free from the drawbacks described above.

In particular, an object of the present invention is to provide an installation and a method for the production of rubber and/or plastic conglomerates which enhances productivity and versatility with respect to prior art installations.

These objects and others besides, which shall become more readily apparent in the description that follows, are substantially achieved by an installation and by a method for the production of rubber and/or plastic conglomerates as described and claimed herein.

Additional features and advantages shall become more readily apparent from the detailed description of a preferred, but not exclusive, embodiment of an installation for the production of rubber and/or plastic conglomerates, according to the present invention. The description shall be provided hereafter with reference to the accompanying figures, provided purely by way of non limiting indication, in which:
- Figure 1 shows a schematic plan view of an installation according to the present invention;
- Figure 2 shows a front elevation view of a caisson, formed by a lower die and by an upper lid shown separate, of the installation of Figure 1;
- Figure 3 shows a lateral elevation and partially sectioned view of the caisson of Figure 2;
- Figure 4 shows a bottom view of the caisson of Figure 2;
- Figure 5 shows a top view of the caisson of Figure 2;
- Figure 6 shows a side elevation view of a first detail of the installation of Figure 1;
- Figure 7 shows a front elevation view of the first detail of Figure 6;
- Figure 8 shows a front elevation view of a second detail of the installation of Figure 1; and
- Figure 9 shows a plan view of the second detail of Figure 8;
- Figure 10 shows the section X-X of Figure 1; and
- Figure 11 shows the section XI-XI of Figure 1.

With reference to the accompanying drawings, the number 1 globally designates an installation for the production of rubber and/or plastic conglomerates, according to the present invention.

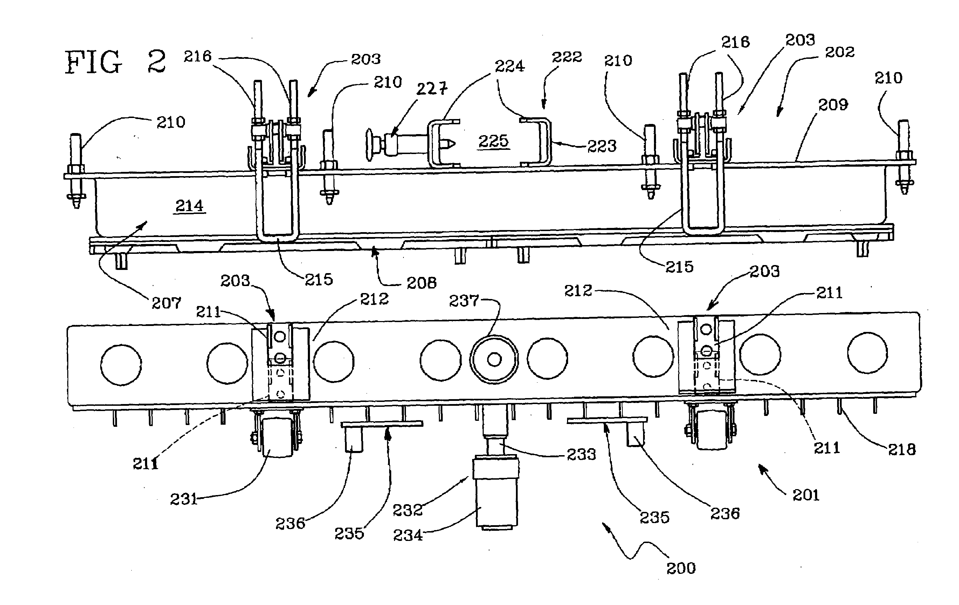

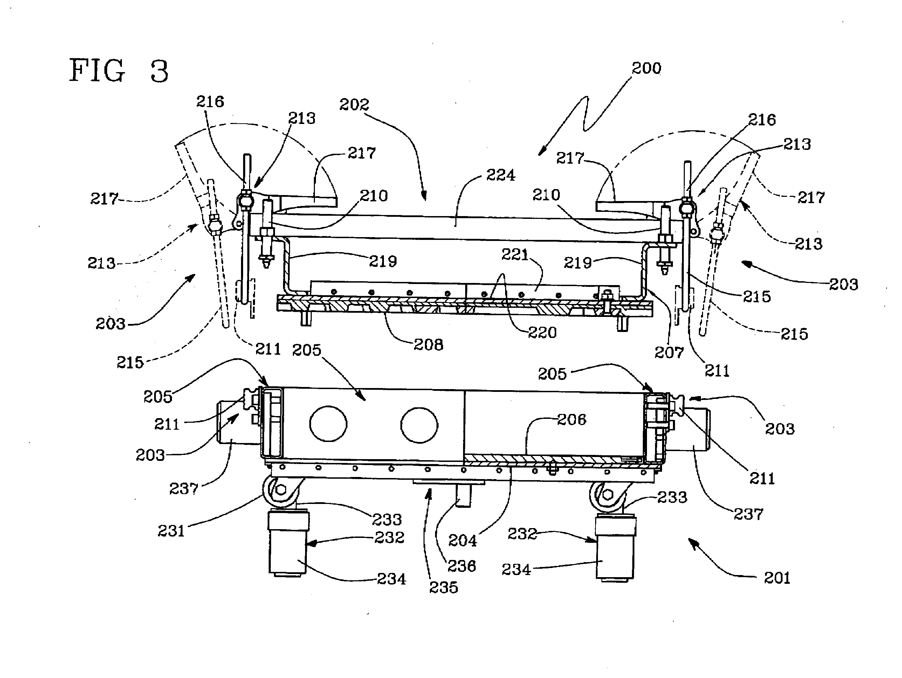

The installation 1 a moulding station 100 and at least a moulding caisson 200 constituted, as shown in Figures 2 and 3, by a container, or lower die 201, destined to contain the conglomerate, and by a punch, or upper lid 202, able to be inserted at least partially into the lower die 201.

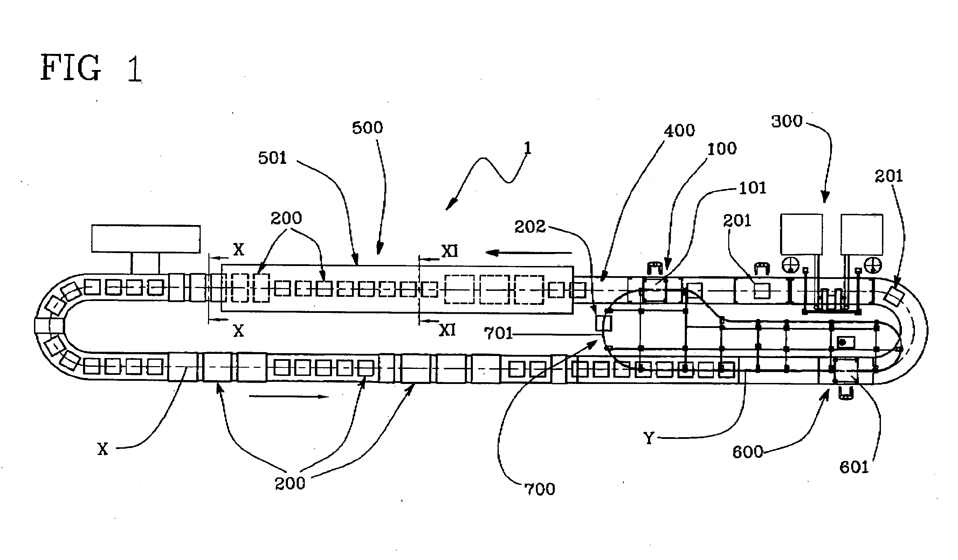

The lower die 201 of the caisson 200 is previously filled, by appropriate means 300, known in themselves and therefore shown only schematically in Figure 1, with an incoherent mixture containing particles of rubber and/or plastic material and an aggregating material. The aggregating material, known in the sector as aggregating chemistry, is usually constituted by a binder and by a catalyser. The binder, activated by the catalyser during the method described below, changes its own chemical-physical properties, determining the union of the particles of rubber/plastic and the transformation of the incoherent mixture into a compact and mechanically resistant final conglomerate.

After weighing and shaving the mixture in the die 201, the mixture is fed to the moulding station 100 where the upper lid 202 is set down onto the mixture contained in the die 201, to close the caisson 200.

For this purpose, the moulding station 100 comprises thruster means 101, movable between a non operative position, in which they lie distanced from the moulding die 201, and an operative position, in correspondence with which they thrust the upper lid 202, which in this step performs the function of a snapping tool, on the lower die 201, to compress the mixture contained in the caisson 200. Advantageously, the moulding caisson 200 further comprises a device 203 for locking the upper lid 202 on the lower die 201, to maintain the mixture in the state of compression provided by the thruster means 101 even when said thruster means 101 return to the non operative position and are disengaged from the upper lid 202. The pressure enhances the action of the aggregating material, and in particular of the catalyser which accelerates the chemical physical reactions in the binder and between the binder and the rubber/plastic particles, leading to the formation of the final conglomerate.

At this point, the caisson 200, still closed and containing the compressed mixture, can be moved from the moulding station 100, by transport means 400, along a feeding path X, to a warehouse or to further processing stations. Preferably, since the binder that is employed is usually heat-activated, the installation 1 further comprises means 500 for heating the mixture. Said heating means 500 are located along the feeding path X, downstream of the moulding station 100, so that the pressure exerted by the upper lid 202 on the mixture and the temperature determine the reaction of the aggregating material during transport, without the caisson 200 occupying the moulding station 100 for a long time. Preferably, the heating means 500 comprise a heating tunnel 501 through which passes the feeding path X and consequently the caisson 200.

The installation 1 lastly comprises an opening and unloading station 600 in which the caisson 200 is opened and the conglomerate, which has cooled during its travel and is provided with a determined compactness, is extracted from the die 201. The means 300 for filling the lower die 201, the moulding station 100, the means 500 for heating the compressed mixture and the opening and unloading station 600 are located in sequence along the feeding path X.

In the preferred embodiment, schematically illustrated in Figure 1, the installation 1 is a continuous cycle installation and it comprises a plurality of moulding caissons 200 moved along a feeding path X enclosed in a loop. The transport means 400 mutually connect the means 300 for filling the lower die 201, the moulding station 100, the means 500 for heating the mixture and the opening and unloading station 600.

Figure 1 also shows auxiliary transport means 700 which move the upper lids 202, drawn from the dies 201 in the opening and unloading station 600, towards the moulding station 100, in which the upper lids 202 are associated and pressed against the lower dies 201.

The dies 201 always move on the closed path X defined by the transport means 400 whilst the lids 202 move together with the dies 201 along the closed path X, between the moulding station 100 and the opening and unloading station 600, and along an auxiliary path Y defined by the auxiliary transport means 700, between the opening and unloading station 600 and the moulding station 100.

Analysing in greater detail the elements described above, it is noted that with reference to the preferred embodiment illustrated in Figures 2, 3, 4 and 5, the lower die 201 of the caisson 200 is defined by a container provided with a bottom wall 204 of square or rectangular shape and with four lateral walls 205, preferably formed by tubular portions with rectangular section (Figure 3).

To impart the desired shape to the contained mixture and to the final conglomerate, the die 201 also comprises at least an appropriately shaped tray 206, shown in Figure 3, removably located on the bottom wall 204. The tray 206 supports t he m ixture a nd a lso allows t he extraction of the final conglomerate from the caisson 200.

The plan shape of the die 201 and the contour of the tray, illustrated herein, are not limiting, as the caissons 200 can assume any shape compatible with the capability of extracting the final conglomerates and with the size of the remaining parts of the installation 1.

The upper lid 202 comprises a punch 207 shaped complementarily to the plan shape of the die 201, to be housed at least partially in the cavity of the die 201. The punch 207 bears, integral therewith, an interchangeable bottom 208 which comes in contact with the mixture and is appropriately s haped to impress the desired shape on the conglomerate.

The lid 202 also has, in correspondence with its own outer perimeter 209, a plurality of centring elements 201, defined by threaded pivots with adjustable abutment and oriented vertically, which serve the dual function of guiding the lid 202 as it advances inside the die 201 and to work as an end stop in the advancing motion of the punch 207, to defined the required thickness of the final conglomerate.

The device 203 for locking the upper lid 202 on the lower die 201 comprises a plurality of hooks 211 mounted on a lateral surface 212 of the lower die 201 and a plurality of elements 213 for engaging with said hooks 211 mounted on a lateral surface 214 of the upper lid 202.

Each of the engagement elements 213 comprises a U shaped tie rod 215, hinged in correspondence with its own ends 216 to a control lever 217. The control lever 217, itself hinged to the outer perimeter 209 of the upper lid 202, serves the purpose of moving the tie rod 215 between a lower position, shown in dashed line in Figure 3, in which the tie rod 215 is distanced from the respective hook 211, and an upper position, in which the tie rod 215 comes in contact with the respective hook 211 and pulls the upper lid 202 towards the lower die 201, advantageously determining the compression of the mixture even without the action of the thruster means 101.

To clarify the operation, Figure 3 shows in dashed lines hooks 211 dissociated from the die 201 and engaged to the tie rods 215. In actual fact, the hooks 211 always remain integral with the die 201.

Preferably, the hooks 211, the tie rods 215 are adjustable in height according to the required thickness of the final conglomerate. Figure 2 shows, in dashed lines, the hooks in a lower position. The centring and end stop elements 210 are also adjustable in height according to the set pressing travel.

The number, the positions and the dimensioning of the hooks 211 and o f the engagement elements 213 are a function of the characteristics of the final conglomerate to be obtained.

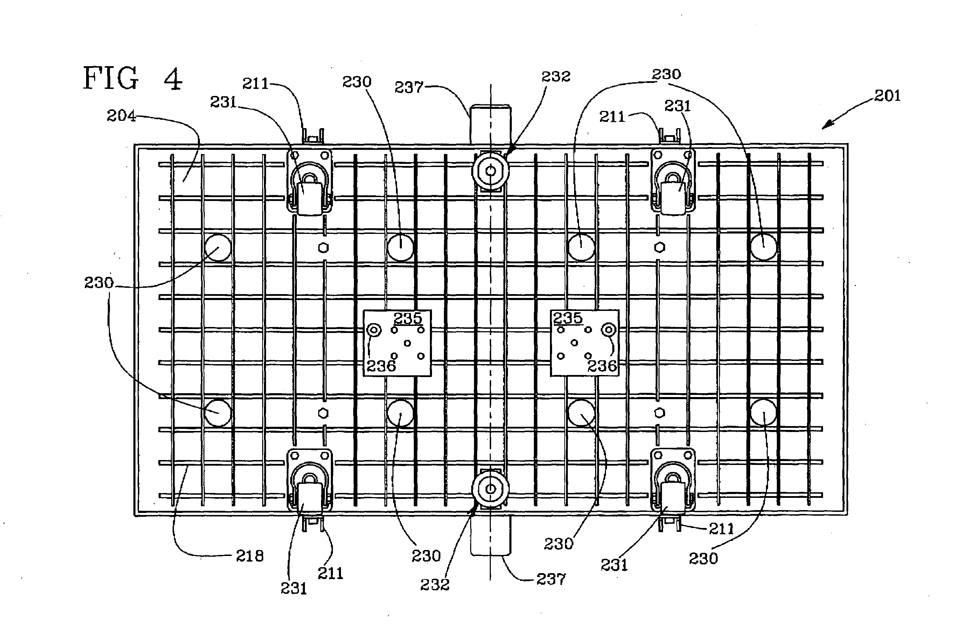

To optimise the technical and constructive characteristics of the moulding caisson 200, the tubular portions with rectangular cross section which define the lateral walls 205 of the lower die 201 are also holed on the outer part and the bottom wall 204 is kept resistant and light by the coupling with a grid 218 (Figure 4).

The upper lid 202 is also constructed according to the same criteria as the die 201. The punch 207 comprises four section bars 219 which define the quadrangular outer perimeter 209, a plate 220 which inferiorly closes the lid 202, and a stiffening grid 221 located on the plate 220 at the opposite side from the interchangeable bottom 208 (Figures 2, 3 and 5).

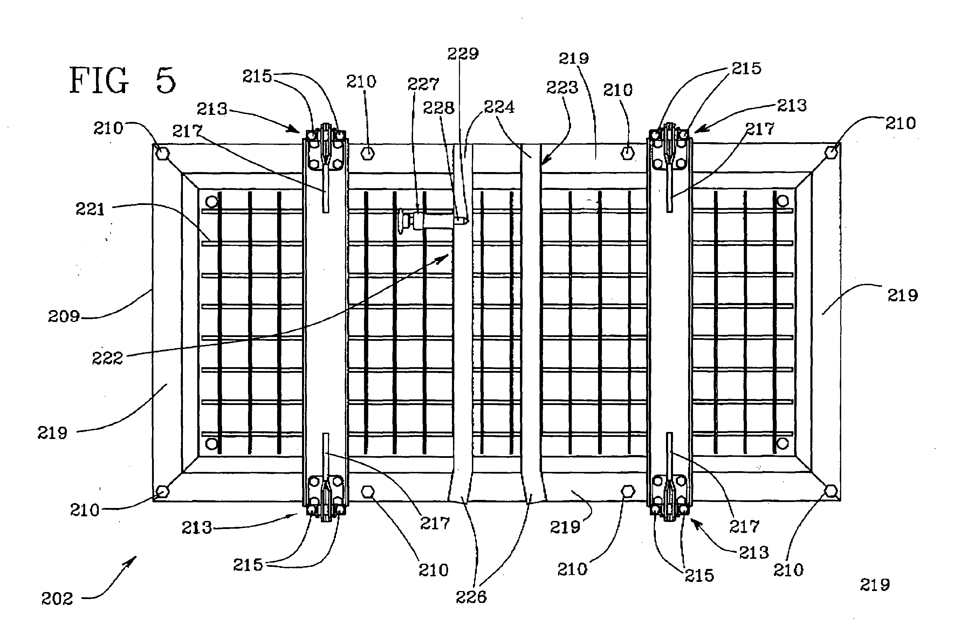

The moulding caisson 200 also has a latching device 22 mounted on the upper lid 202. The latching device 222 is defined by a guide 223 which comprises a pair of parallel and mutually opposite section bars 224 developing along a direction of advance of the caisson 200 (Figures 2 and 5) and integrally fastened to two of the four section bars 219 which define the outer perimeter 209 of the upper lid 202.

The two section bars 224 have U-shaped cross section with their concavities facing each other, in order to define between the section bars 224 themselves a seat 225 (Figure 2). Moreover, in correspondence with an end of the guide 223, the section bars diverge from each other to define an invitation portion 226 (Figure 5).

The guide 223 is able to be engaged in sliding fashion with a rail 701 which develops along the auxiliary path Y defined by the auxiliary transport means 700 above the feeding path X, as shown in Figure 1.

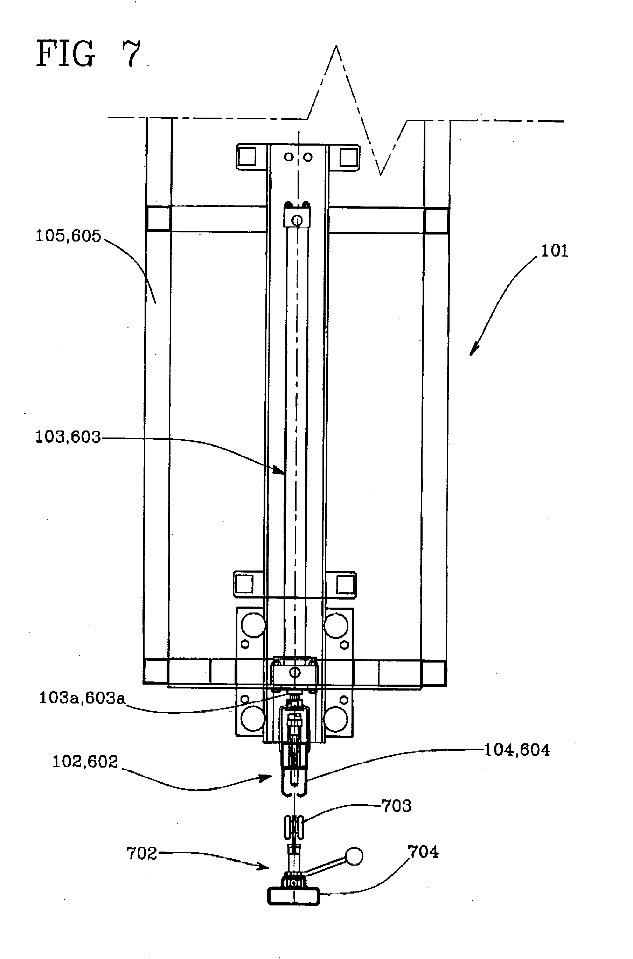

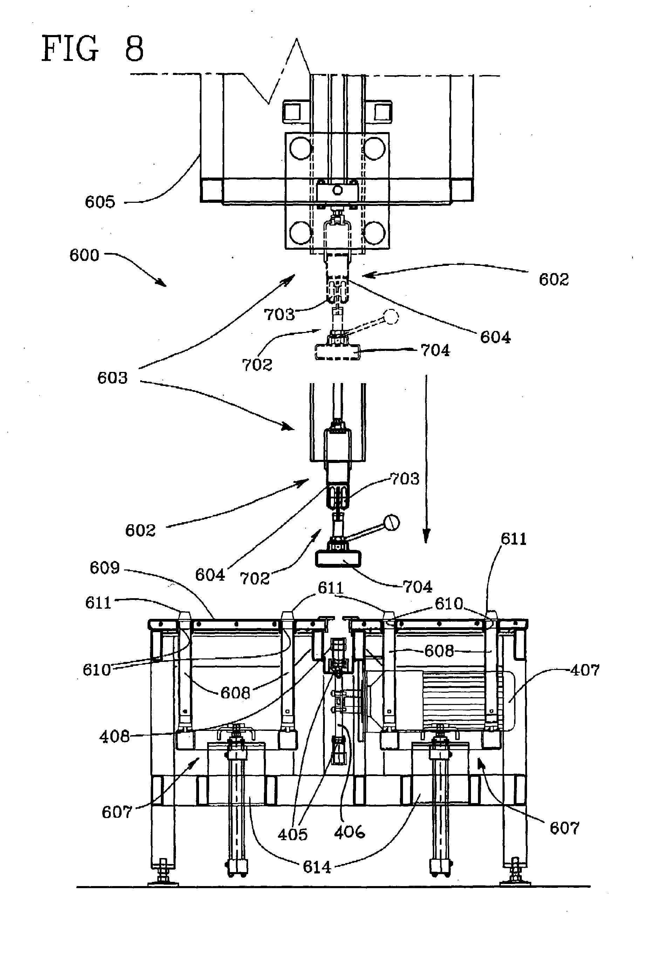

In the preferred and illustrated embodiment, the guide 223 is engaged in sliding fashion on the rail 701 by means of at least a carriage 702, visible in Figure 7 and 8, able to be integrally fastened to the guide 223 and able to slide on the rail 701.

The rail 701 has a cross section, not illustrated herein, that is adapted to receive the wheels 703 of the carriage 702. The carriage 702 also has a portion 704 that is shaped complementarily to the seat 225 of the guide 223. The complementarily shaped portion 704 is inserted into the guide 223 and is locked thereon whilst the carriage 702 moves on the rail 701, to allow the sliding of the upper lids 202, suspended from the rail 701, between the opening and unloading station 600 and the moulding station 100. In the moulding station 100, the lid 202 suspended from the rail 701 is brought downwards until it is set down on the lower die 201, loaded with mixture, and subsequently thrust against the die 201 itself. In the opening and unloading station 600, the lid 202 is raised from the die 201 and brought on the rail 701 so that, sliding towards the moulding station 100, a new cycle may start. Simultaneously, the die 201 emptied of its content, according to a procedure described below, is conducted by the transport means 400 towards the filling means 300 and subsequently to the forming station 100, to start a new cycle together with the upper lid 202.

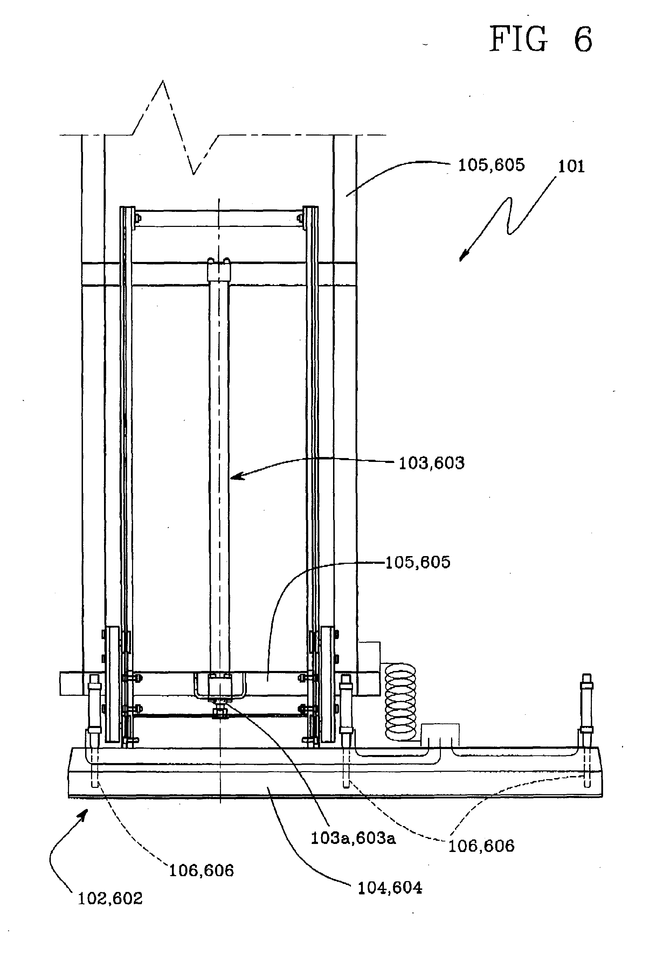

In the moulding station 100, to bring the lid 202 on the die 201, the carriage 702 with attached the guide 223 of the lid 202, sliding on the rail 701, goes to be engaged in sliding fashion with a lower end 102 of a pressing piston 103, shown in Figures 6 and 7, preferably hydraulically actuated, which is a part of the thruster means 101. The lower end 102 of the pressing piston 103 attached to the rod 103a is shaped substantially as a horizontal bar 104, whose cross section, visible in Figure 7, is identical to the cross section of the rail 701. The carriage 702, which in Figure 7 is shown separate from the horizontal bar 104, is inserted in sliding fashion on the lower end 102 of the pressing piston 103 and here is locked here by appropriate means.

The pressing piston 103, mounted on an appropriately dimensioned frame 105, is movable between a retracted configuration, corresponding to the non operative position of the thruster means 101, and an extended configuration, corresponding to the operative position of the thruster means 101.

In the retracted configuration the piston 103 supports the lid 102, and its lower end 102, bar shaped 104, defines with continuity a portion of the rail 701. In the extended position the piston 102 sets the lid 202 down on the die 201 and subsequently thrust the lid 202 towards the die 201, to compress the mixture. After the compression and locking of the lid 202 on the die 201, the carriage 702 is extracted from the guide 223 moving the caisson 200 and the piston 103 is retracted, bring the carriage 702 with it.

In the opening and unloading station 600 the motion of the incoming caisson 200 causes the invitation portion 226 of the slide 223 to be inserted on the complementarily shaped portion 704 of the carriage 702 locked on a lower end 601 of lifting piston 602, preferably hydraulically operated and structurally similar to the compression piston 103. For this reason, Figures 6 and 7 represent both the pressing piston 103 and the lifting piston 603. The lower end 602 of the lifting piston 603 attached to the stem 603a is shaped substantially as a horizontal bar, whose cross section is identical to the section of the rail 701. The horizontal bar 604 bears the wheels 703 of the carriage 702.

The lifting piston 603, shown associated to the opening and unloading station in Figure 8 , is mounted on a suitably d imensioned frame 605 and it is movable between an extended position, to be engaged with the upper lid 202, and a retracted configuration, to raise the lid itself 202. In the extended position the piston 603, by means of the carriage 702, engages the lid 202 still positioned on the die 201. In the retracted configuration the piston 603 supports the lid 202, and its own lower end 602, bar shaped, defines with continuity a portion of the rail 701, in such a way that the carriage 702 and the lid 202 fastened thereto can slide, automatically or driven manually, towards the moulding station 100.

Advantageously, to lock the lid 202 on the lower end 102 of the pressing piston 103 or, similarly, on the lower end 602 of the lifting piston 603 and preventing it from slipping during vertical movements, the latching device 222 further comprises an element 227 for locking the lid 202 on the carriage 702 (Figures 2 and 5) and a device 106, 606 for locking the carriage 702 on the lower end 102, 602 of the pistons 103, 603.

The locking element 227 has a threaded pivot pin 228 inserted in a hole obtained in one of the two section bars 224. The end 229 of the pivot pin 228 is movable to approach the end 102, 602 of the piston 103, 603 coupled to the lid 202, to interfere with the complementarily shaped portion 704 of the carriage 702 and prevent the longitudinal movements of the lid itself 202.

The locking device 106, 606 comprises a plurality of small pneumatic pistons, shown in Figures 6 and 7 both for the pressing piston 103 and for the lifting piston 603, mounted on the bar 104, 604 at the end of each of the pistons 103, 603. Although the lifting piston 603 and the pressing piston 103 are structurally similar, the length of the bars 104, 604 and the number and the position of the small pistons 106, 606 can vary as the case may require. The small pneumatic pistons 106, 606 can act on the carriage 702, to limit or prevent its movements relative to the bar itself 104, 604.

Figure 6, 7 shows a piston, which could be both a pressing piston 103 and a lifting piston 603, which has three small pistons 106, 606.

The opening and unloading station 600 further comprises an extractor device 607 whose function is to extract the finished conglomerate from the die 201 once the die has been opened. This device 607 finds advantageous applications in the present installation 1 but it can be used in combination with other similar installations, for example provided with prior art presses, in which the aggregating process of the conglomerate completely takes place under the press.

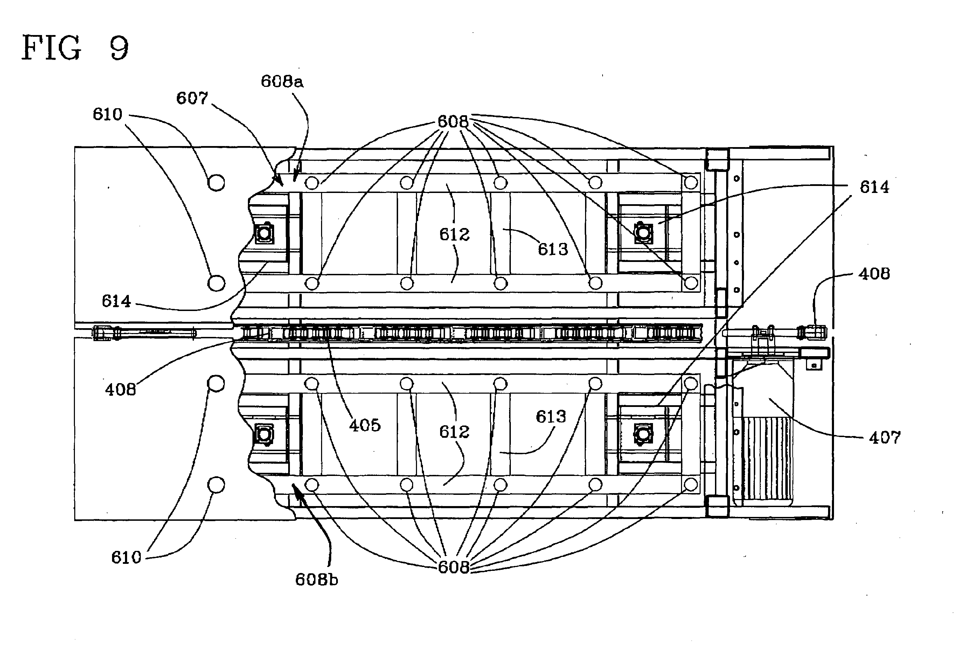

With reference to Figures 8 and 9, the extractor device 607 comprises at least a thruster 608 able to be engaged in a corresponding opening 230 (Figure 4) obtained in the bottom wall 204 of the lower die 201, to raise the tray 206 whereon the finished conglomerate bears.

Preferably, as shown in Figure 4, the bottom wall 204 of the die 201 has a plurality of openings 230 which are traversed by as many vertical thrusters 608 having elongated cylindrical shape.

Figure 8 shows that the extractor device 607 is advantageously located under a bearing plane 609 whereon stations the caisson 200 and over which moves the lifting piston 603. In the bearing plane 609 are obtained as many openings 610 as there are thrusters 608.

The thrusters 608 are movable between a retracted configuration and an extended position. In the retracted configuration, the upper ends 611 of the thrusters 609 are below the bearing plane 609 or slightly above it, so as not to interfere with the caisson 200. In the extended position, the thruster 609 traverse the openings 610 and are engaged in the openings 230 obtained in the bottom wall 204 of the lower die 201, until lifting the tray 206 and the finished conglomerate. Once it is extracted, the finished conglomerate can easily be withdrawn, both manually and using an appropriate automatic apparatus, with no risk of damaging it.

In the embodiment shown in Figure 9, the extractor device 607 comprises twenty-four thrusters 608 which traverse as many openings 610 positioned equidistant on the bearing plane 608 to define four rows and six columns.

The thrusters 608 of each row are mounted on a respective horizontal beam 612 and the beams 612 of two adjacent rows are rigidly connected to each other by means of cross members 613, to form two sets of thrusters 608a, 608b.

Each of the two sets 608a, 608b is moved vertically by a pair of actuators 614, for instance hydraulic or pneumatic cylinders, between the extended and the retracted configuration.

The caissons 200 can have different dimensions but the openings 230 on the bottom of the lower die 201 are always dimensioned to receive a minimum number of thrusters able to lift the tray 206. The caisson shown in detail in Figures 2, 3, 4 and 5 has eight openings in which can be engaged eight thrusters 608 belonging to two adjacent columns (Figure 9).

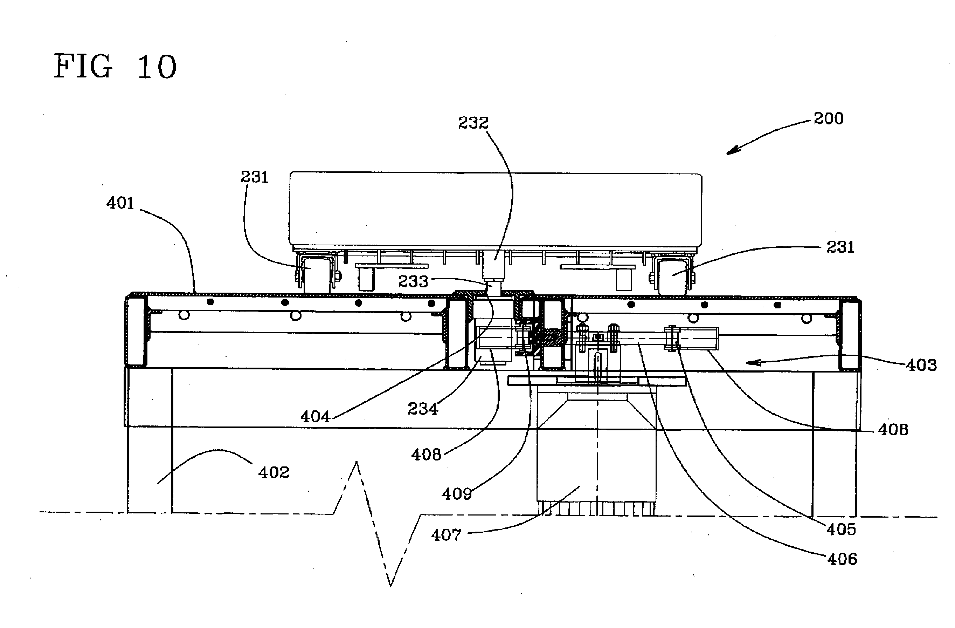

To transport the complete caissons 200 from the loading station 100 to the opening and unloading station 600 and to transport the dies 201 alone from the opening and loading station 600 to the loading station 100, the transport means 500 are advantageously defined by a bearing and sliding plane 401, supported by a ground bearing base 402, and by at least a driving mechanism 403, to move the caisson 200 on the plane 401 (Figure 10). The bearing and sliding plane 401 develops along the feeding path X and coincides with the bearing plane 609 in the opening and unloading station 600.

Each of the moulding caissons 200 further comprises rolling friction means 231 mounted under the lower die 201, to allow an easy sliding of the caisson 200 on the bearing and sliding plane 401.

The structure of the transport means 400 described herein finds advantageous application in the present installation 1 but it can be used in combination with installations provided with prior art presses, and also in other types of similar installations, to transport the dies alone.

In detail, according to Figures 2 and 3, the rolling friction means 231 are defined by a plurality of pivoting wheels which roll on the fixed bearing and sliding plane 401. Said wheels 231 are arranged on two lateral rows which are symmetrical with respect to a centreline of the die 201. The bearing and sliding plane 401 is provided with a slit 404 which extends with continuity along the entire feeding path X and the driving mechanism 402 interferes, through the slit 404, with the moulding caisson 200.

With reference to Figures 3 and 10, the moulding caisson 200 has at least a pivot 232 mounted under the lower die 201 and extending away from the bottom wall 204. The pivot 232 is inserted in the slit 404 of the bearing and sliding plane 401 in such a way as to slide therein along the feeding path X but it is appropriately shaped not be able to exit along a vertical direction, for instance while the tray 206 is being extracted from the die 201. For this purpose, the pivot 232 has a base portion 233, connected to the bottom wall 204 of the lower die 201, whose diameter is slightly smaller than the width of the slit 404 and an end portion 234 whose diameter is greater than the width of the slit 404. Preferably, the die 201 has a pair of pins 232 positioned along the centreline of the die 201.

The end portions 234 of the pivots 232 come in contact with the driving mechanism 403 which determines the motion of the lower die 201.

Advantageously, the transport means 400 comprise a plurality of driving mechanisms 403 positioned in sequence along the feeding path X and able to be controlled independently from each other, to be able to impart to the caissons 200 differentiated speeds of advance in correspondence with the area of competence of each of the driving mechanisms.

Each of the driving mechanisms 403 comprises a chain 405 wound on motorised wheels 406. In the section illustrated in Figure 10, the chain 405 lies in a horizontal plane that is parallel to the plane of bearing and sliding 401 and one of the motorised wheels 406 is keyed on an electric motor 407 oriented vertically. In the view of the opening and unloading station 600 shown in Figure 8, the chain 405 lies in a vertical plane and one of the motorised wheels 406 is keyed on an electric motor 407 oriented horizontally.

The chain 405 has a plurality of projections 408 integral with their own meshes which, along the branch 409 o f the chain 405 adjacent to the slot 403 of the bearing a nd s liding p lane 401, b ear against t he pivots 2 32 a nd p ush t hem, t o cause the advance of the moulding caisson 200. The distance between the two pivots 232 of a caisson 200 is set according to the constant pitch of the projections 408 of the chain 405.

The chains 405 of two successive driving mechanisms 403 are arranged in such a way that when the caisson 200 reaches the end of the area of competence of the first mechanism 403, it is picked up by the second one and it continues its travel along the feeding path X.

In the moulding stations 100, in the opening and unloading station 600 and in correspondence with the filling means 300, the chain 405 is commanded to stop during the operations pertaining to each station. Alternatively, appropriate mechanisms, not shown herein, allow to release the caisson 200 from the chain 405 and to re-engage the caisson to the chain 405, whilst the chain 405 is always moving.

In addition to the path enclosed in a loop X, the installation 1 according to the invention can be provided with a branch for the entrance of caissons 200 coming from a tooling area and with a branch for their exit or production end, not shown herein.

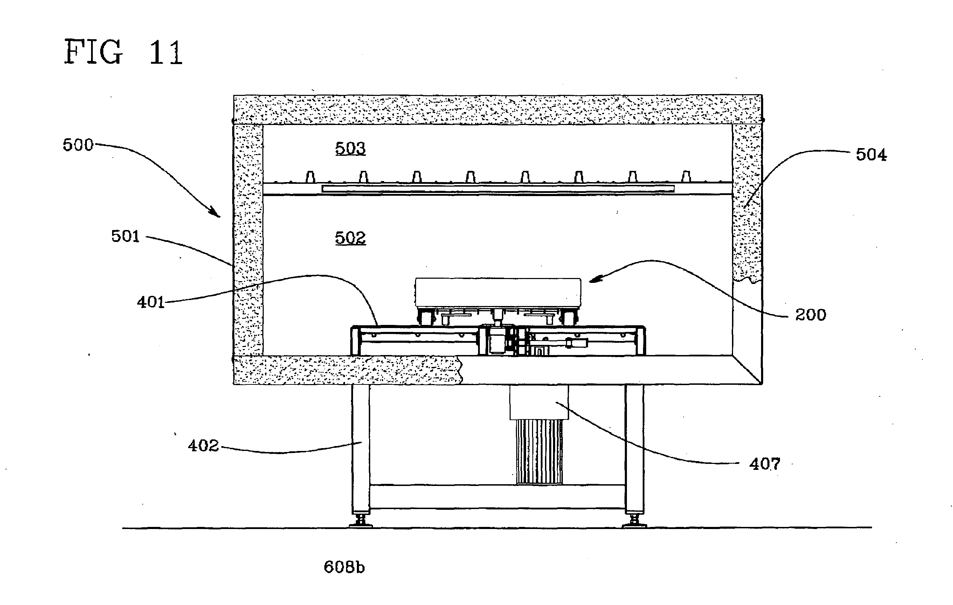

With reference to Figure 11, the heating tunnel 501 comprises a pair of parallel and superposed conduits. The lower conduit 502 is traversed by the bearing and sliding plane 401 and by the caissons 200 and it comprises a bank of electrical resistors, not shown, positioned along the development of the tunnel 501. The upper conduit 503 serves the purpose of recirculating the hot air, which tends to rise, and comprises a plurality of fans, not shown, which facilitate said recirculation. The air which, by effect of the fans, flows through the upper conduit 503 in the direction of advance of the caissons 200, at the end of the tunnel 501 passes into the lower conduit 502 and laps the caissons 200 in counter-flow, to be then again aspirated into the upper chamber 503. The outer walls 504 of the tunnel 501 are also filled with heat-insulating material, such as rock wool.

Advantageously, all the operations of the cycle are controlled and commanded by a programmable logic unit, not shown, connected to appropriate control sensors, to identify the type of caisson in each station and along the feeding path X and the type of mixture contained therein, to the motors that actuate the transmission chains, to the hydraulic pistons, to the heating means and to the filling means. In particular, the type of caisson 200 is recognised by means of a recognition template 235 provided with recognition pins 236 located under the die 201 and sighted by proximity sensors installed in predefined positions along the feeding path X.

The logic unit manages the entire process, possibly with the manual intervention of one or more operators in correspondence with the most critical areas, such as the moulding station and the unloading station. For example, the logic unit controls the distance between the various c aissons by modifying the speed of each of the transport mechanisms according to stored data. In any case, the dies 201 are provided with buffers 237 to absorb the collisions between a caisson and another.

The installation according to the present invention allows to enhance productivity and versatility with respect to prior art installations.

In the first place, since the compression and heating of the mixture is effected simultaneously on a plurality of caissons which are separate from the press, the production rate is far greater.

Moreover, the installation is very versatile because it allows to provide each caisson with a bottom that is contoured according to the shape of the conglomerate to be obtained, with not need to suspend production in order appropriately to equip the snapping tool of the press. As a consequence, the installation allows to produce in sequence artefacts that are very different from each other.

Additionally, the heating means, separate from the thrusting means, allow to optimise the heating parameters with respect to the compression parameters and thereby to enhance the quality of the conglomerates.

The particular structure of the transport means allows to vary the distance between the caissons and their velocity, allowing to manage in independent fashion different moulds containing different mixtures and easily to replace the caissons.

Lastly, the system for unloading the finished conglomerate according to the present invention assures that the final product is not damaged in the final processing step.

Moreover, as shown schematically in Figure 1 as well, caissons 200 having different sizes and shapes can be handled simultaneously.

In conclusion, for the same operating costs, the installation according to the present invention allows to produce from a minimum of 25 m²/h to a maximum of 63m²/h of product, depending on the differentiation of the artefacts to be obtained in the same cycle, whilst the production rate of a traditional installation is at most 22m²/h.

## Claims

1. Installation for the production of rubber and/or plastic conglomerates, comprising:
at least a moulding caisson (200) having a lower die (201);
means (300) for filling the lower die (201) with a mixture containing particles of rubber and/or plastic material and an aggregating material;
a moulding station (100) comprising thruster means (101) able to move between a non operative position, in which they lie distanced from the moulding die (201), and an operative position, in which they thrust a snapping tool on the lower die (201), to compress the mixture contained in the caisson (200);
**characterised in that** the snapping tool is defined by an upper lid (202) belonging to the caisson (200) and able to be inserted at least partially in the lower die (201), the thruster means (101) being able to be disengaged from the upper lid (202); and **in that** the moulding caisson (200) further comprises a device (203) for locking the upper lid (202) on the lower die (201), to maintain the mixture in the compression state conferred by the thruster means (101), with said thruster means (101) disengaged from the upper lid (202), and to facilitate the action of the aggregating material, to form a mechanically resistant final conglomerate.

2. Installation as claimed in claim 1, **characterised in that** it further comprises transport means (400) to move said at least a moulding caisson (200) containing the compressed mixture away from the moulding station (100).

3. Installation as claimed in claims 1 or 2, **characterised in that** it further comprises means (500) for heating the compressed mixture and heat-activate the aggregating material.

4. Installation as claimed in claim 2, **characterised in that** it further comprises a storage area for receiving said at least a moulding caisson (200) moved by the transport means (400).

5. Installation as claimed in claim 3, **characterised in that** the transport means (400) define a feeding path (X) of said at least a caisson (200); the means (300) for filling lower die (201), the moulding station (100) and the means (500) for heating the compressed mixture being positioned in sequence along said feeding path (X).

6. Installation as claimed in claim 5, **characterised in that** it comprises a plurality of moulding caissons (200) moved along the feeding path (X).

7. Installation as claimed in claim 5, **characterised in that** the means (500) for heating the compressed mixture comprise a heating tunnel (501) traversed by the feeding path (X) and by said at least a caisson (200).

8. Installation as claimed in claim 5, **characterised in that** it further comprises an opening and unloading station (600), positioned along said feeding path (X) downstream of the means (500) for heating the compressed mixture, for the opening of said at least a moulding caisson (200) and the unloading of the conglomerate.

9. Installation as claimed in claim 8, **characterised in that** the feeding path (X) of said at least a caisson (200) is a closed path and **in that** it comprises a plurality of moulding caissons (200) moved along said closed feeding path (X) through the means (300) for filling the lower die (201), the moulding station (100), the means (500) for heating the mixture and the opening and unloading station (600).

10. Installation as claimed in claim 9, **characterised in that** it further comprises auxiliary transport means (700) for moving the upper lids (201) between the opening and unloading station (600), in which the upper lids (202) are picked up from the lower dies (201), and the moulding station (100), in which the upper lids (202) are associated to the lower dies (201).

11. Installation as claimed in claim 1, **characterised in that** the device (203) for locking the upper lid (202) on the lower die (201) comprises a plurality of hooks (211) mounted on a lateral surface (212) of the lower die (201) and a plurality of elements (213) for engaging said hooks (211) mounted on a lateral surface (214) of the upper lid (202).

12. Installation as claimed in claim 11, **characterised in that** each of the engagement elements (213) comprises a U shaped tie rod (215), hinged in correspondence with its own ends (216) to a control lever (217), for moving the tie rod (215) between a lower position, in which the tie rod (215) is distanced from the respective hook (211), and an upper position, in which the tie rod (215) comes in contact with the respective hook (211) and pulls the upper lid (202) towards the lower die (201).

13. Installation as claimed in claim 12, **characterised in that** the hooks (211) and the tie rods (215) are adjustable in height according to the thickness of the mixture introduced in the caisson (200) and to the required thickness of the final conglomerate.

14. Installation as claimed in claim 1, **characterised in that** the thruster means (101) comprise a pressing piston (103) capable of being engaged in correspondence with its own lower end (102) with the upper lid (202) of the caisson (200); the pressing piston (103) being movable between a retracted c onfiguration, corresponding to the non operative position of the thruster means (101), and an extended configuration, corresponding to the operative position of the thruster means (101).

15. Installation as claimed in claim 8, **characterised in that** the thruster means (101) comprise a pressing piston (103) capable of being engaged in correspondence with its own lower end (102) with the upper lid (202) of the caisson (200); the pressing piston (103) being movable between a retracted configuration, corresponding to the non operative position of the thruster means (101), and an extended configuration, corresponding to the operative position of the thruster means (101).

16. Installation as claimed in claims 14 or 15, **characterised in that** the pressing piston (103) is operated hydraulically.

17. Installation as claimed in claim 8, **characterised in that** the opening and unloading station (600) comprises a lifting piston (603) capable of being engaged in correspondence with its own lower end (602) with the upper lid (202) of the caisson (200); the lifting piston (603) being movable between an extended position, to be engaged with the upper lid (202), and a retracted configuration, to lift said upper lid (202).

18. Installation as claimed in claim 15, **characterised in that** the opening and unloading station (600) comprises a lifting piston (603) capable of being engaged in correspondence with its own lower end (602) with the upper lid (202) of the caisson (200); the lifting piston (603) being movable between an extended position, to be engaged with the upper lid (202), and a retracted configuration, to lift said upper lid (202).

19. Installation as claimed in claim 17 o 18, **characterised in that** the lifting piston (603) is operated hydraulically.

20. Installation as claimed in claim 18, **characterised in that** the moulding caisson (200) further comprises a latching device (222) mounted on the upper lid (202) and able to be engaged with the lower end (102) of the pressing piston (103), with the lower end (602) of the lifting piston (603) and with auxiliary transport means (700), for moving the upper lid (202) between the moulding station (100) and the opening and unloading station (600).

21. Installation as claimed in claim 20, **characterised in that** the auxiliary transport means (700) comprise a rail (701) extending between the moulding station (100) and the opening and unloading station (600) above the feeding path (X) defined by the transport means (400).

22. Installation as claimed in claim 21, **characterised in that** the latching device (222) comprises a guide (223) developing along a direction of advance of the moulding caisson (200) and able to be engaged in sliding fashion with the rail (701) of the auxiliary transport means (700), with the lower end (103) of the pressing piston (102) and with the lower end (602) of the lifting piston (603).

23. Installation as claimed in claim 22, **characterised in that** it further comprises at least a carriage (702) able to be integrally fastened to the guide (223) of the lid (202) and able to slide on the rail (701) in order to engaged in sliding fashion said guide (223) on said rail (701).

24. Installation as claimed in claims 21 or 22, **characterised in that** the lower end (102) of the pressing piston (103) and the lower end (602) of the lifting piston (603), with the pistons (103, 603) in the respective retracted positions, define respective portions of the rail (701) of the auxiliary transport means (700).

25. Installation as claimed in claim 23, **characterised in that** the latching device (222) further comprises an element (227) for locking the lid (202) on the carriage (702), and a device (106) for locking the carriage (702) on the lower end (102) of the pressing piston and a device (606) for locking the carriage (702) on the lower end (602) of the lifting piston (603).

26. Installation as claimed in claim 5, **characterised in that** the transport means (400) comprise a bearing and sliding plane (401) developing along the feeding path (X) and at least a mechanism(403) for driving said at least a caisson (200) on said bearing and sliding plane (401).

27. Installation as claimed in claim 26, **characterised in that** said at least a moulding caisson (200) comprises rolling friction means (231) mounted under the lower die (201) to slide on said bearing and sliding plane (401).

28. Installation as claimed in claim 26, **characterised in that** said at least a driving mechanism (403) is positioned under the bearing and sliding plane (401) and interferes, through a slit (404) obtained in said plane (401) and developing along the feeding path (X), with the moulding caisson (200).

29. Installation as claimed in claim 28, **characterised in that** the moulding caisson (200) comprises at least a pin (232) inserted in the slit (404) obtained in the bearing and sliding plane (401) to interfere with said at least a driving mechanism (403).

30. Installation as claimed in claim 29, **characterised in that** said at least a driving mechanism (403) comprises a chain (405) wound on motorised wheels (406) and having a plurality of projections (408) whereby said at least a pin (232) is pushed to cause the advance of said at least a moulding caisson (200).

31. Installation as claimed in claim 26, **characterised in that** the transport means (400) comprise a plurality of driving mechanisms (403) positioned in sequence along the feeding path (X).

32. Installation as claimed in claim 31, **characterised in that** the driving mechanisms (403) can be controlled independently of each other, to impart to at least a caisson (200) differentiated speeds of advance in correspondence with each of said driving mechanisms (403).

33. Installation as claimed in claim 8, **characterised in that** the moulding caisson (200) further comprises at least a tray (206) positioned removably on a bottom wall (204) of the lower die (201), to support the conglomerate; the opening and unloading station (600) further comprising an extractor device (607), for extracting said at least a tray (206) from the lower die (201).

34. Installation as claimed in claim 33, **characterised in that** the extractor device (607) comprises at least a thruster (608) able to be engaged in at least an opening (230) obtained in the bottom wall (204) of the lower die (201) to lift said at least a tray (206).

35. Installation as claimed in claim 33, **characterised in that** the extractor device (607) is positioned under a bearing plane (609) of the caisson (200) and comprises a plurality of thrusters (608), movable between a retracted position and an extended position, in which they traverse a plurality of openings (610) obtained in the bearing and sliding plane (609), to be engaged in openings (230) obtained in the bottom wall (204) of the lower die (201) and to lift said at least a tray (206).

36. Method for the production of rubber and/or plastic conglomerates, comprising the following steps: feeding a mixture containing particles of rubber and/or plastic material and an aggregating material into a lower die (201) of a moulding caisson (200); thrusting a snapping tool on the lower die (201), to compress the mixture contained in the caisson (200); **characterised in that** the snapping tool is defined by an upper lid (202) belonging to the caisson (200) and able to be inserted at least partially into the lower die (201) and **in that** it further comprises the step of locking the upper lid (202) on the lower die (201) to maintain the mixture in the compression state conferred during the thrusting step even after the cessation of the thrusting step and to facilitate the action of the aggregating material, to form a mechanically resistant final conglomerate.

37. Method as claimed in claim 36, **characterised in that** the step of thrusting the upper lid (202) on the lower die (201) is carried out by thruster means (101) fastened to the upper lid (202) and **in that** it further comprises the step of disengaging said thruster means (101) from the upper lid (202) after the step of locking the upper lid (202) on the lower die (201).

38. Method as claimed in claim 36, **characterised in that** it further comprises the steps of moving said at least a moulding caisson (200) containing the compressed mixture away from the moulding station (100) and of heating said at least a moulding caisson (200) containing the compressed mixture, to heat-activate the aggregating material, during the moving step.

39. Method as claimed in claim 38, **characterised in that** it further comprises, subsequently to the heating step, the steps of opening the caisson (200) and extracting the conglomerate.

40. Method as claimed in claim 39, **characterised in that** said at least a moulding caisson (200) is moved along a closed feeding path (X) and **in that**, after the opening and extracting steps, the lower die (201) is subjected to a new mixture feeding step.

41. Installation for the production of rubber and/or plastic conglomerates, comprising:
at least a moulding caisson (200) having a lower die (201) and an upper lid (202) able to be inserted at least partially into the lower die (201);
means (300) for filling the lower die (201) with a mixture containing particle of rubber and/or plastic material, a binder and an aggregating material;
a moulding station (100) comprising thruster means (101) movable between a non operative position, in which they lie distanced from the moulding die (201), and an operative position, in which they thrust a snapping tool on the lower die (201), to compress the mixture contained in the caisson (200);
transport means (400) for moving said at least a moulding caisson (200) away from the moulding station (100) along a predetermined feeding path (X);
**characterised in that** said transport means (400) comprise a bearing and sliding plane (401) developing along the feeding path (X) and at least a driving mechanism (403) of said at least a caisson (200) on said bearing and sliding plane (401).

42. Installation as claimed in claim 41, **characterised in that** said at least a moulding caisson (200) comprises rolling friction means (231) mounted under the lower die (201) to slide on said bearing and sliding plane (401).

43. Installation as claimed in claim 42, **characterised in that** said at least a driving mechanism (403) is positioned under the bearing and sliding plane (401) and interferes, through a slit (404) obtained in said plane (401) and developing along the feeding path (X), with the moulding caisson (200).

44. Installation as claimed in claim 43, **characterised in that** the moulding caisson (200) comprises at least a pin (232) inserted in the slit (404) obtained in the bearing and sliding plane (401) to interfere with said at least a driving mechanism (403).

45. Installation as claimed in claim 44, **characterised in that** said at least a driving mechanism (403) comprises a chain (405) wound on motorised wheels (406) and having a plurality of projections (408) whereby said at least a pin (232) is thrust to cause the advance of said at least a moulding caisson (200).

46. Installation as claimed in any claim from 41 to 45, **characterised in that** the transport means (400) comprise a plurality of driving mechanisms (403) positioned in succession along the feeding path (X).

47. Installation as claimed in claim 46, **characterised in that** the driving mechanisms (403) can be controlled independently of each other, to impart to said at least a caisson (200) differentiated speeds of advance in correspondence with each of said driving mechanisms (403).

48. Installation for the production of rubber and/or plastic conglomerates, comprising:
at least a moulding caisson (200) having a lower die (201) and a upper lid (202) able to be inserted at least partially into the lower die (201);
means (300) for filling the lower die (201) with a mixture containing particles of rubber and/or plastic material, a binder and an aggregating material;
a moulding station (100) comprising thruster means (101) which are movable between a non operative position, in which they lie distanced from the moulding die (201), and an operative p osition, in which they push a snapping tool on the lower die (201), to compress the mixture contained in the caisson (200);
an opening and unloading station (600) for opening said at least a moulding caisson (200) and unloading the final conglomerate;
**characterised in that** the moulding caisson (200) further comprises at least at ray (206) removably positioned on a bottom wall (204) of the lower die (201), to support the conglomerate; and **in that** the opening and unloading station (600) further comprises an extractor device (607), to extract said at least a tray (206) from the lower die (201).

49. Installation as claimed in claim 48, **characterised in that** the extractor device (607) comprises at least a thruster (608) able to be engaged in at least an opening (230) obtained in the bottom wall (204) of the lower die (201) to lift said at least a tray (206).

50. Installation as claimed in claim 48, **characterised in that** the extractor device (607) is positioned under a bearing plane (609) of the caisson (200) and comprises a plurality of thrusters (608) movable between a retracted position and an extended position, in which they traverse a plurality of openings (610) obtained in the bearing plane (609), to be engaged in openings (230) obtained in the bottom wall (204) of the lower die (201) and to lift said at least a tray (206).
